# EUROPEAN PATENT APPLICATION

(11) **EP 1 574 406 A1**
(43) Date of publication of application: **14.09.2005**
(21) Application number: 05005378.4
(22) Date of filing: 11.03.2005
(51) Int. Cl.: B60R 21/20

(54) **Airbag module**

(30) Priority: 12.03.2004 US 552436 P
(71) Applicant: TAKATA CORPORATION, Tokyo 106-8510 (JP)
(72) Inventor: Kokeguchi, Akira, Tokyo 106-8510 (JP)
(74) Representative: Banzer, Hans-Jörg

(57) **Abstract**

An airbag module (30) includes a module cover (35), an airbag (10) configured to inflate in an event of a vehicle emergency, and an inflator (20) configured to provide gas for inflating the airbag (10). The inflator (20) and the airbag (10) are connected to a retainer (40), and the module cover (35) and the retainer (40) are connected to form an enclosure volume (50). A ratio of the enclosure volume (50) to a portion of the enclosure volume (50) that is occupied by components of the airbag module (30) is 100:40 to 100:100. A displacement member (70) is disposed within the enclosure volume (50).

## Description

### BACKGROUND

The present invention relates to an airbag device in which an airbag is inflated to protect a vehicle occupant in the event of a vehicle emergency, such as a collision. More particularly, the present invention relates to an airbag device in which unoccupied space within an airbag module is reduced to improve an internal pressure rise of the airbag module during inflation so the airbag can deploy more quickly.

An airbag device is usually stored within a recess in a vehicle steering wheel or dashboard. The airbag device includes an airbag module, an airbag, and an inflator for inflating the airbag. The airbag module has a module cover and a retainer. The airbag and inflator are typically mounted to the retainer and are enclosed between the module cover and the retainer. The module cover faces into a vehicle passenger compartment and includes pre-weakened breaking points. In the event of a vehicle emergency, the airbag is inflated by gas produced by the inflator. As the airbag inflates, the internal pressure of the airbag module increases until the pre-weakened breaking points fail thereby enabling the airbag to deploy into the passenger compartment. The inflated airbag receives and retains the vehicle occupant.

The amount of space available within the airbag module for storing the airbag and inflator is determined by the dimensions of the airbag module, which are governed by vehicle size and configuration. A particular airbag module may be standardized to enable the same airbag module to be used in a variety of vehicles. Standardized airbag modules also decrease manufacturing costs and increase production throughput. Thus, the dimensions of an airbag module may be tailored for vehicle application versatility and manufacturability rather than for optimal packaging and/or operability of a particular airbag and inflator.

Additionally, efforts to reduce overall vehicle weight have resulted in thinner airbag fabrics and downsized inflators. Thinner airbag fabrics are also desirable because such fabrics have improved foldability and deployment characteristics. However, use of thinner fabrics and downsized inflators decreases the amount of space occupied by the folded airbag and the inflator. If the airbag module is not resized accordingly, the dimensions of the airbag module may be disproportionately large relative to the amount of space required to efficiently package and/or operate the airbag and inflator.

In conventional airbag devices, for example, the inflator and folded airbag may occupy thirty percent or less of the total space within the airbag module. Thus, the amount of free (empty) space within the airbag module can be greater than seventy percent. As a result, the amount of time required for airbag deployment is increased because the airbag must inflate into the large volume of empty space within the airbag module before developing sufficient internal pressure to burst through the module cover into the passenger compartment. Thus, the ability of the airbag to rapidly inflate to efficiently protect the vehicle occupant is diminished.

### SUMMARY OF THE INVENTION

The above problems are overcome by an airbag module according to claim 1, by an airbag device according to claim 13, and by an airbag device according to claim 14. The dependent claims define preferred and advantageous embodiments of the invention.

The present invention relates to an airbag device for protecting an occupant of a vehicle. The airbag device includes an airbag, an inflator, and an airbag module. The airbag and inflator are disposed within an enclosure formed by the airbag module. A ratio of a volume of the enclosure to a volume occupied by components within the airbag module is 100:40 to 100:100. Thus, an internal pressure rise of the airbag module during inflation is improved so that the airbag can deploy more quickly to efficiently protect the vehicle occupant.

### BRIEF DESCRIPTION OF THE DRAWINGS

The accompanying drawings, which are incorporated in and constitute a part of this specification, illustrate embodiments of the invention, and together with the description serve to explain principles of the invention.
Figure 1 is a cross sectional side view of an embodiment of an airbag device according to the present invention.
Figure 2 is a rear view of the airbag device of Fig. 1.
Figure 3 is a cross sectional side view of an airbag module of Fig. 1 with an airbag and an inflator removed.
Figure 4 is a cross sectional side view of the airbag device of Fig. 1 including a displacement member.
Figure 5 is a perspective view of the displacement member of Fig. 4.
Figure 6 is a perspective view of an embodiment of a displacement member according to the present invention.
Figure 7 is a perspective view of an embodiment of a displacement member according to the present invention.
Figure 8 is a cross sectional side view of an embodiment of a displacement member according to the present invention.
Figure 9 is a graph illustrating internal pressure versus time for an airbag device according to an embodiment of the present invention as compared to a conventional airbag device.
Figure 10 illustrates a method of determining the volume of an airbag according to the present invention.

### DETAILED DESCRIPTION

Reference will now be made in detail to embodiments of the invention, examples of which are illustrated in the accompanying drawings. An effort has been made to use the same reference numbers throughout the drawings to refer to the same or like parts.

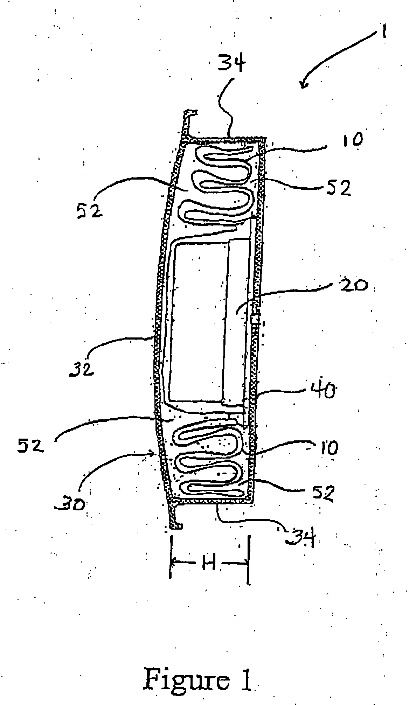

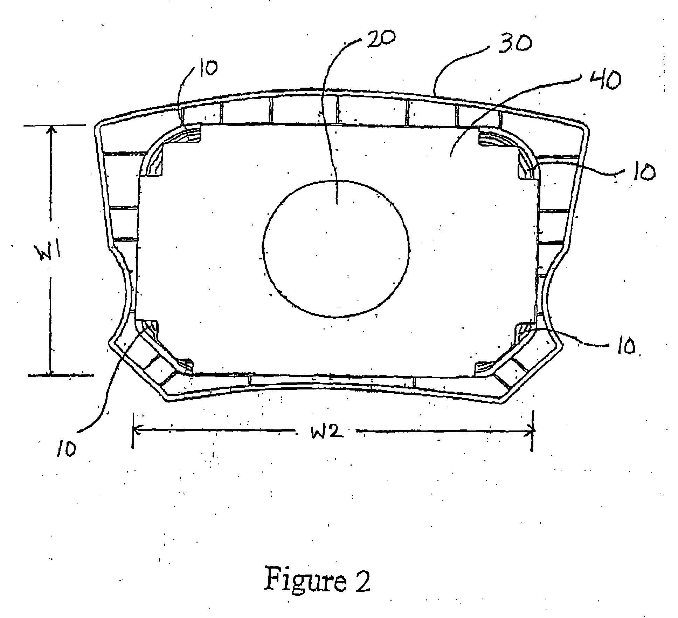

According to an embodiment of the present invention, an airbag device 1 is provided. As shown in Figs. 1 and 2, the airbag device 1 includes an airbag 10, an inflator 20, and an airbag module 30.

The airbag 10 and the inflator 20 are disposed within the airbag module 30. The airbag 10 is stored in the airbag module 30 in a folded state, and the inflator 20 is operatively connected to the airbag 10. During a vehicle emergency, the inflator 20 generates inflation gas, which flows into the airbag 10 to inflate the airbag 10.

The airbag module 30 encloses the airbag 10 and the inflator 20. The airbag module 30 includes a module cover 35 and a retainer 40. The module cover 35 has a cover member 3 5 a and wall members 35b extending from the cover member 35a. The cover member 35a has pre-weakened breaking points (not shown) to enable the inflating airbag 10 to burst through the cover member 35a into a vehicle passenger compartment when sufficient pressure develops within the airbag module 30.

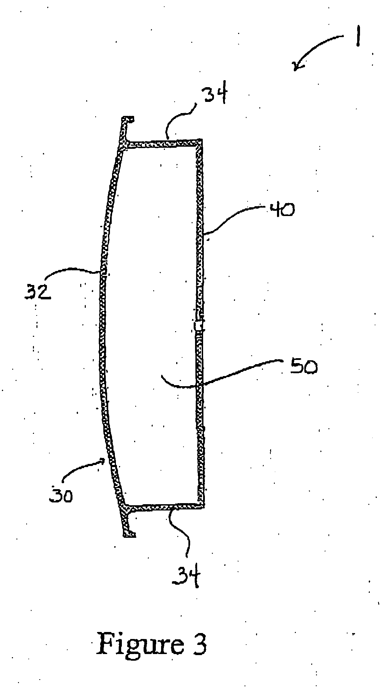

The retainer 40 supports the airbag 10 and the inflator 20 within the airbag module 30. The retainer 40 is connected to the wall members 35b of the module cover 35 so that the module cover 35 and the retainer 40 form an enclosure, as shown in Fig. 3. The enclosure defines an enclosure volume 50, which is a volume of space within the airbag module 30 available for storing the folded airbag 10 and the inflator 20.

As shown in Fig. 1, the folded airbag 10 and the inflator 20 occupy a portion of the enclosure volume 50 when the folded airbag 10 and the inflator 20 are stored within the enclosure. The portion of the enclosure volume 50 occupied by the folded airbag 10 and the inflator 20 comprises an occupied volume. The occupied volume can also include a volume of space within the enclosure occupied by other components of the airbag module 30, such as mounting hardware. The remaining free (or empty) space within the enclosure comprises an unoccupied volume 52.

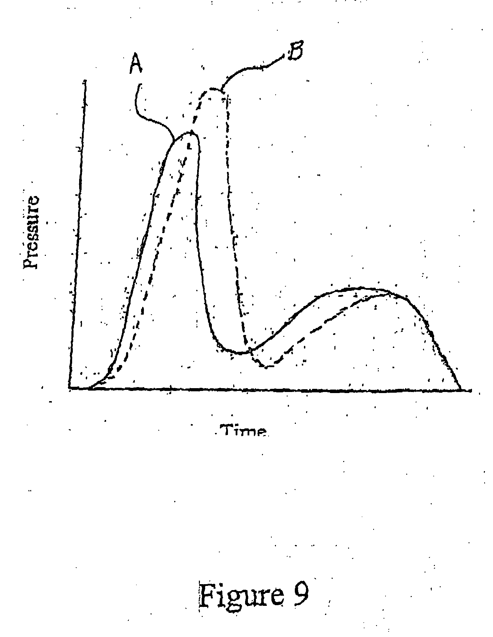

According to an embodiment of the present invention, a ratio of the enclosure volume 50 to the occupied volume is 100:40 to 100:100 (packaging ratio). Thus, the unoccupied volume 52 within the enclosure is sixty percent or less of the enclosure volume 50. In this manner, deployment time of the airbag 10 in a vehicle emergency is improved over a conventional airbag device. For example, the inflating airbag 10 is able to deploy from the airbag module 30 more rapidly because the reduction in empty space (unoccupied volume 52) permits internal pressure within the enclosure (A in Fig. 9) to build up more quickly than internal pressure in a conventional airbag device (B in Fig. 9). In other words, there is less empty space (unoccupied volume 52) to be filled by the inflating airbag 10 before sufficient pressure is exerted on the cover member 35a to burst the cover member 35a. Thus, the airbag 10 is able to deploy into the passenger compartment more rapidly than a conventional airbag.

According to an embodiment of the present invention, the airbag module 30 can be configured to achieve the packaging ratio of 100:40 to 100:100. For example, a height H (shown in Fig. 1), a first width W1 (shown in Figs. 1 and 2), and/or a second width W 2 (shown in Fig. 2) can be varied to achieve the desired packing ratio for a particular airbag 10 and inflator 20.

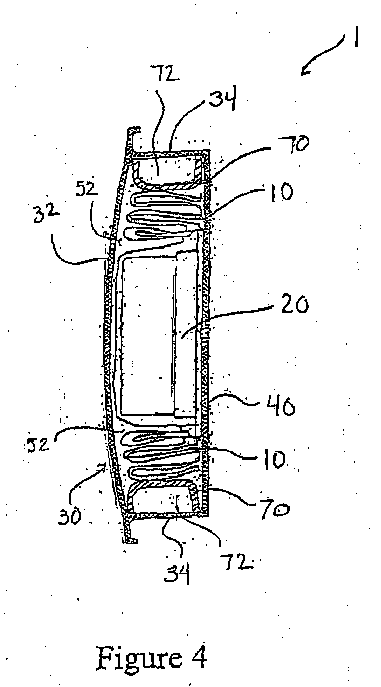

As shown in Fig. 4, the airbag device 1 can also include at least one displacement member 70 disposed within the airbag module 30. The displacement member 70 enables the airbag device 1 to achieve the desired packaging ratio by occupying a portion of the enclosure volume 50 so that the enclosure volume 50 is effectively reduced. Thus, when the airbag device 1 includes the displacement member 70, the enclosure volume 50 is reduced by the volume of space occupied by the displacement member 70.

The displacement member 70 can be configured to be attached to an inner surface of the airbag module 30, as shown in Fig. 1. For example, the displacement member 70 can be attached to a wall member 35b of the module cover 35 with conventional mounting hardware (such as bolts or screws), with adhesives, or by welding. The displacement member 70 can also be attached to the retainer 40. Alternatively, the displacement member 70 can be formed integrally with the module cover 35 and/or the retainer 40.

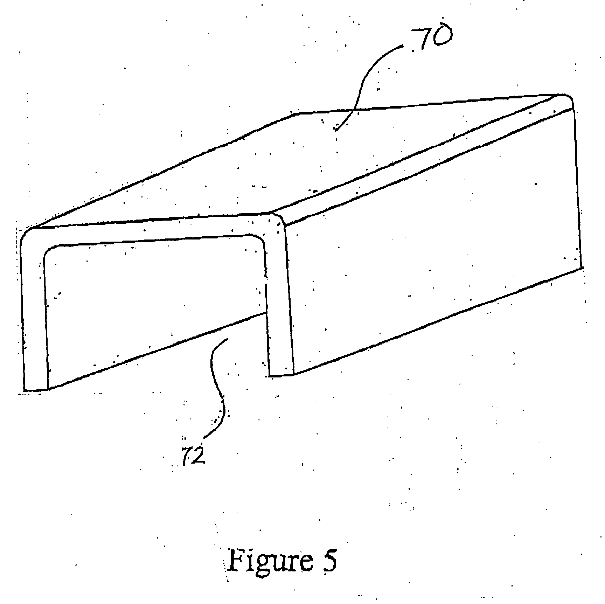

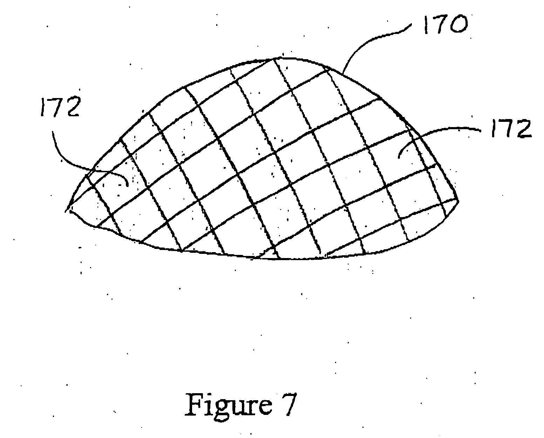

The displacement member 70 can be formed in a shape that enables the displacement member 70 to displace a sufficient volume of space while at the same time keeping the weight of the displacement member 70 down (so that an overall weight of the vehicle can be kept down). For example, as shown in Fig. 5, the displacement member 70 can be formed as an elongated member having a central hollow portion 72, such as a channel. Alternatively, a displacement member 170 could be formed to have a rounded cup-shape, as shown in Fig. 7.

As shown in Fig. 4, the displacement member 70 can be disposed within the airbag module 30 so that the hollow portion 72 faces toward an inner surface of the airbag module 30.

Thus, the hollow portion 72 is isolated from the airbag 10 so that the airbag 10 is precluded from entering the hollow portion 72. In this manner, the displacement member 70 reduces the available storage volume for the airbag 10 and the inflator 20 thereby reducing the amount of empty space 52 in the airbag module 30.

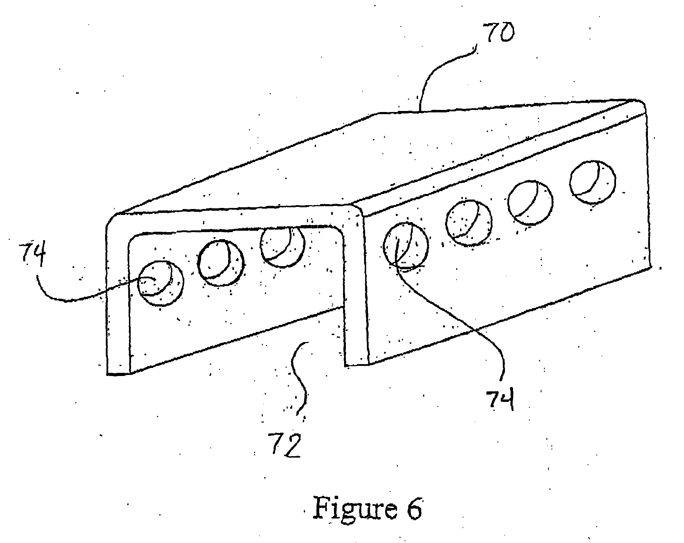

The displacement member 70 can also include at least one opening 74 to further reduce the weight of the displacement member 70. For example, as shown in Fig. 6, the opening 74 can comprise a through hole or a plurality of through holes. Alternatively, the displacement member 70, 170 can be formed as a rigid web, mesh, screen, or lattice structure having openings 172, as shown in Fig. 7.

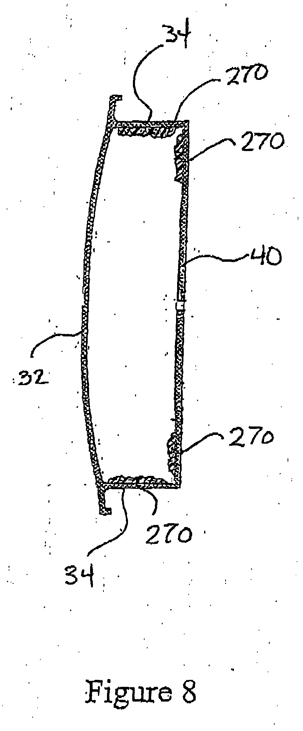

The displacement member 70 can be made from a material configured to withstand the temperature and pressure generated within the airbag module 30 during airbag inflation. For example, the displacement member 70 can comprise a metal or polymer. Alternatively, a displacement member 270 can comprise a spray-on foam configured to be sprayed onto an inner surface of the airbag module 30 and to harden into a rigid state, as shown in Fig. 8.

Thus, according to embodiments of the present invention, an airbag device is provided in which unoccupied space within the airbag device is reduced to improve the internal pressure rise of the airbag device during inflation so that the airbag can deploy rapidly to efficiently protect a vehicle occupant.

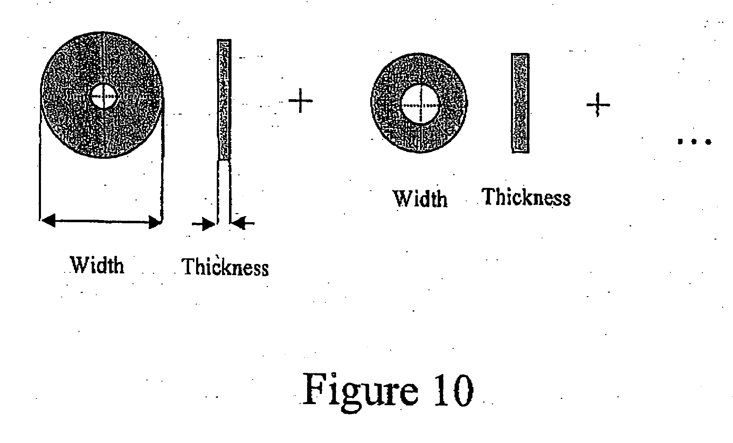

Figure 10 illustrates a method of calculating the volume of an airbag according to the present invention. In the example shown in Figure 10, cross sections of the airbag are selected, the volume of the cross section is calculated by multiplying the thickness of the airbag by the area of the airbag fabric, and adding the volume of the selected cross sections to calculate a volume. One of ordinary skill in the art would also recognize other methods of calculating the volume of the airbag. For example, the volume for each of the various components of the airbag could be calculated separately and summed.

Other embodiments of the invention will be apparent to those skilled in the art from consideration of the specification and practice of the invention disclosed herein. It is intended that the specification and examples be considered as exemplary only.

## Claims

1. An airbag module comprising:
a module cover (35);
an airbag (10) configured to inflate in an event of a vehicle emergency; and
an inflator (20) configured to provide gas for inflating the airbag (10),
wherein the inflator (20) and the airbag (10) are connected to a retainer (40),
wherein the module cover (35) and the retainer (40) are connected to form an enclosure volume (50), and
wherein a ratio of the enclosure volume (50) to a portion of the enclosure volume (50) that is occupied by components of the airbag module (30) is 100:40 to 100:100.

2. The airbag module according to claim 1, further comprising a displacement member (70; 170) disposed within the enclosure volume (50).

3. The airbag module according to claim 2, wherein the displacement member (70;170) comprises metal.

4. The airbag module according to claim 2 or claim 3, wherein the displacement member (70; 170) comprises a polymer.

5. The airbag module according to any one of claims 2 to 4, wherein the displacement member (70; 170) comprises wire mesh.

6. The airbag module according to any one of claims 2 to 5, wherein the displacement member (70; 170) is connected to an inner surface of the airbag module.

7. The airbag module according to any one of claims 2 to 6, wherein the displacement member (70; 170) is formed integrally with the module cover.

8. The airbag module according to any one of claims 2 to 7, wherein the displacement member (70; 170) is connected to the retainer.

9. The airbag module according to any one of claims 2 to 6, wherein the displacement member (70; 170) is formed integrally with the retainer.

10. The airbag module according to any one of claims 2 to 5, wherein the displacement member (70; 170) includes a hollow portion and is configured to be attached to an inner surface of the airbag module.

11. The airbag module according to claim 10, wherein the displacement member (70; 170) includes at least one opening (74; 172).

12. The airbag module according to claim 11, wherein the opening (74; 172) comprises a through hole.

13. An airbag device for protecting an occupant of a vehicle, comprising:
an airbag module (30) including an airbag (10), an inflator (20) for inflating the airbag, and a retainer (40),
wherein the airbag (10) and the inflator (20) are disposed within an enclosed portion (50) of the module (30), and
wherein a volume of unoccupied space within the enclosed portion (50) of the module is no greater than 60 percent of a volume of the enclosed portion (50) of the module.

14. An airbag device for protecting an occupant of a vehicle, comprising:
an airbag module (30) including an airbag (10), an inflator (20) for inflating the airbag, and a retainer (40),
wherein the airbag (10) and the inflator (20) are disposed within an enclosed portion (50) of the module (30), and
wherein a ratio of a volume of the enclosed portion (50) of the module to a volume occupied by the airbag (10) and the inflator (20) is 100:40 to 100:100.
